# EUROPEAN PATENT SPECIFICATION

(11) **EP 2 176 574 B1**
(45) Date of publication and mention of the grant of the patent: **02.08.2017**
(21) Application number: 08790002.3
(22) Date of filing: 19.06.2008
(51) Int. Cl.: F16J 15/12, F16K 1/226

(54) **LAYERED METALLIC GASKET**
GESCHICHTETE METALLISCHE DICHTUNG
JOINT MÉTALLIQUE STRATIFIÉ

(30) Priority: 12.07.2007 IT TO20070519
(43) Date of publication of application: 21.04.2010
(73) Proprietor: Seval S.R.L., 24060 Villongo (BG) (IT)
(72) Inventor: FENAROLI, Angelo, 24060 Villongo (BG) (IT)
(74) Representative: Bruni, Giovanni
(86) International application number: PCT/IT2008/000413
(87) International publication number: WO 2009/008022

(56) References cited:
- EP-A- 0 465 092
- EP-A- 0 497 013
- DE-A1- 19 530 579
- DE-B3-102005 019 250
- DE-C1- 3 721 967
- JP-A- 1 098 771
- US-A- 3 776 873

## Description

The object of the present finding is an innovative metallic head gasket, with high properties of seal and of maintaining the locking torque at high temperatures, and the relative production process.

In the state of the art numerous embodiments of metallic head gaskets are known. These are elements suitable for ensuring the seal against fluids, be they liquids or gases, and they have numerous uses in mechanical components like valves, elements of machines, internal combustion engines and the like. They consist of a pack of many alternating layers of metal - non-metal held together by interpositioned layers of adhesive. For example, Japanese patent application JP 6081956 describes a head gasket for automobile engines consisting of a metallic layer, coated with a chrome-based layer, in turn coated with a rubber adhesive layer. The adhesive is protected by a further layer of heat-resistant rubber and by a layer of molybdenum disulfide, equipped with lubricating power. On the other hand, Japanese patent application JP 619137 has as its object a head gasket consisting of a metallic layer, coated with a rubber adhesive layer. The adhesive is then protected by a further layer of foamed rubber, the base polymer of which is the same as the adhesive layer.

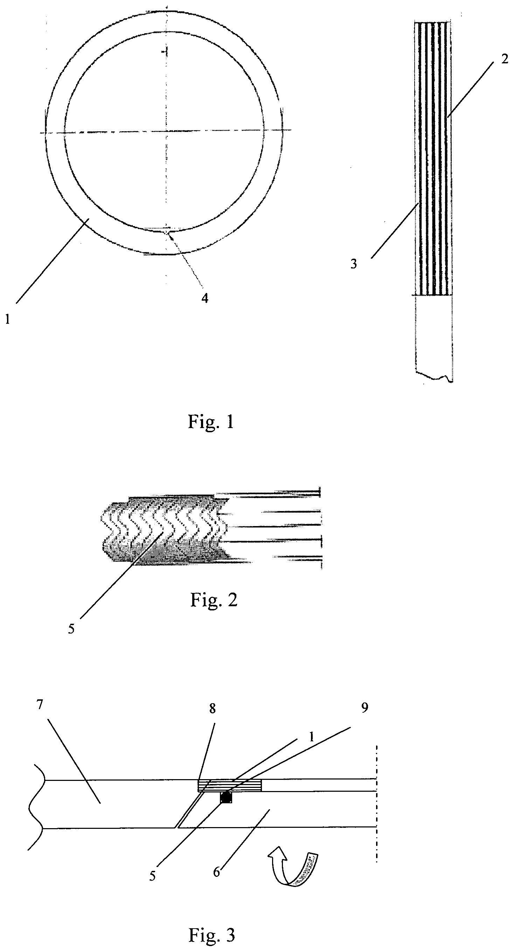

A head gasket according to the preamble of claim 1 is disclosed in EP 0465092 A2. Head gaskets for valves, in particular butterfly valves, are very widely used: they consist of a series of metallic and non-metallic layers, in laminar (or circular crown) form, arranged alternately, where the base metal is a steel, preferably stainless, and the non-metallic material is graphite or polytetrafluoroethylene (PTFE) or similar. An example of metallic head gasket is represented in the two views of Fig. 1. A film of adhesive about 6-7 hundredths of a millimetre thick is arranged between the blades in contact, in order to avoid one slipping with respect to the next.

However, all known applications have a limitation in ensuring the seal at high temperatures. Such a limitation is set at around 200 °C, since above these temperatures the adhesive film undergoes a softening that causes the gluing function to be lost, causing the slipping of the different blades, one with respect to the other, with consequent loss of seal of the entire pack. As the temperature increased the adhesive layer actually tends to dissolve losing weight and thickness. All of this consequently also leads to a reduction in the locking torque.

The purpose of the present finding is to define a head gasket and its production process that eliminate the aforementioned drawbacks allowing the use of gaskets at temperatures much higher than current ones.

According to another purpose, the present finding also defines a composition of the gasket that improves the seal in general, also at low temperatures.

The finding object of the present invention achieves the predetermined purposes as described in claim 1. It concerns a head gasket comprising a plurality of metallic and non-metallic circular crowns, alternating with one another, held together by means of an adhesive wherein the adhesive is applied in spray form. In this way, no loss of thickness occurs when operating at high temperatures. Moreover, the finding uses high-density graphite as non-metallic material in order to reduce the porosity and consequently improve the sealing capability of the gasket, also at low temperatures.

These and other advantages shall become clearer during the course of the detailed description of the invention than shall refer specifically to table 1/1 and in which a pair of preferred example embodiments of the present finding are represented, absolutely not for limiting purposes.

In particular:
- Fig. 1 represents a view and a section of a head gasket according to the invention;
- Fig. 2 shows the partial section of a second type of head gasket, known as a graphoil gasket;
- Fig. 3 schematically shows an application of both of the gaskets of Figs. 1 and 2.

A preferred example of head gasket (1) is the one represented in Figure 1. It comprises a plurality of blades, or rather of circular crown shaped discs that are laid on top of one another according to an alternation of metal (2) - non-metal (3). The metallic blades (2) consist of steel, preferably stainless, whereas the non-metallic blades (3) are made from graphite or PTFE. According to a preferred embodiment, the graphite is of the high-density type, in particular greater than 1.5 g/cm³. The higher density ensures that the graphite has a low porosity, which prevents internal leaks and therefore improves the sealing capability of the gasket. The blades are kept together by arranging an adhesive between each pair of consecutive blades, characterised in that it is applied in spray form. This spray glue consists of a dispersion of natural rubber and resin in the following substances: naphtha (<50%), cyclohexane (<25%), liquefied propane gas (25%), isobutane (<25%) and acetone (<10%). The uniform application of spray glue does not create a thickness that is later subject to dissolving with high temperatures. The gasket can therefore work at high temperatures without fear of a loss of seal and/or of locking torque.

The working process consists of the following steps. Firstly, the plate is cut, preferably with laser technology to make shapes that are not only circular but also of other types, then it is trimmed and roughed. In parallel, the graphite is cut. The layers of steel and of graphite are assembled by piling them up alternately one on top of the other and aligning them by means of a striker (4). Then comes the application of the glue that must be sprayed uniformly and, finally, the cold moulding is performed from which the end product is obtained.

The sealing gasket thus made is able to withstand high temperatures and positive experimental data is available for temperatures of up to 430°C.

The use of high-density graphite also improves the seal of a second type of gasket, graphoil gaskets (5), an example of which is shown in Fig. 2. In this type of gasket the blades consist of a continuous strip of metallic material with special shaped profile-the example in the figures represents a double spiral - coupled with a continuous strip of high-density wound uniformly in a spiral with controlled speed in order to ensure an elastic return. These gaskets, given their elasticity, are particularly suitable for ensuring a perfect seal in variable temperature and pressure conditions, managing to maintain the seal by elastically recovering the linear excursions deriving from the expansion of the materials.

A practical application of both of the described gaskets is in butterfly valves to ensure the seal between disc of the butterfly (6) and seat (7) in closed conditions of the butterfly. As shown in Fig. 3, the two gaskets, the head gasket (1) and the graphoil gasket (5) act in combination, the first ensuring the radial seal (8) and the second ensuring the axial seal (9).

## Claims

1. Head gasket comprising a plurality of blades, or rather of circular crown-shaped, that are laid on top of one another according to an alternation of metal (2) - non metal (3), said blades held together by arranging an adhesive between each pair of consecutive blades, said adhesive as applied in a spray form, **characterised in that** said adhesive is a glue spray consisting of a dispersion of natural glue and resin in the following substances:
naphtha <50%, cyclohexane <25%, liquefied propane gas 25%, isobutane <25% and acetone <10%.

2. Head gasket according to claim 1, where the metallic blades (2) consist of steel, preferably stainless, whereas the non-metallic blades (3) are made from graphite or PTFE.

3. Head gasket according to claim 2, where the graphite is of the high-density type, in particular greater than 1.5 g/cm³.

4. Process for producing a head gasket as defined in previous claims 2 or 3, consisting of the following steps: cutting a plate,
preferably with laser technology, trimming and roughing thereof, cutting the graphite, assembly of the layers of steel and of graphite piling them up alternately one on top of the other and aligning them by means of a striker (4), application of the glue with uniform and homogeneous spray, cold moulding.

5. Use of a head gasket, as defined in one of claims from 1 to 3, and of a graphoil gasket, consisting in a continuous strip of metallic material and of high-density graphite that is wound uniformly in a spiral with controlled speed, in a butterfly valve to ensure the seal between disc of the butterfly (6) and seat (7), where the two gaskets, the head gasket (1) and the graphoil gasket (5) act in combination, the first ensuring the radial seal (8) and the second ensuring the axial seal (9).

## Patentansprüche

1. Kopfdichtung mit einer Vielzahl von Blättern, oder vielmehr in der Gestalt einer kreisförmigen Krone, die übereinander und abwechselnd aus einem Metall (2) oder Nichtmetall (3) gefertigt sind, wobei die genannten Klingen durch Anordnung eines Klebstoffs zwischen jedem Paar von aufeinanderfolgenden Blättern zusammengehalten werden, wobei der genannte Klebstoff in der Form eines Sprays aufgetragen wird, **dadurch gekennzeichnet, dass** der genannte Klebstoff ein Klebstoff-Spray ist, der aus einer natürlichen Dispersion von Klebstoff und Harz aus den folgenden Substanzen besteht: Naphtha <50%, Cyclohexan <25%, verflüssigtes Propangas 25%, Isobutan <25%, und Aceton <10%.

2. Kopfdichtung nach Anspruch 1, wobei die metallischen Blätter (2) aus Stahl, vorzugsweise aus rostfreiem Stahl bestehen, indem die nicht-metallischen Blätter (3) aus Graphit oder PTFE gebildet sind.

3. Kopfdichtung nach Anspruch 2, wobei der Graphit aus dem Typ mit hoher Dichte besteht, die insbesondere größer als 1,5 g/cm³ ist.

4. Verfahren zur Herstellung einer Kopfdichtung gemäß der Definition in den vorhergehenden Ansprüchen 2 oder 3, das folgende Schritte umfasst: Schneiden einer Platte, vorzugsweise mit einer Lasertechnik, Trimmen und Aufrauhen derselben, Graphit Schneiden, die Schichten aus Stahl und Graphit zusammenlegen, indem sie abwechselnd aufeinander gestapelt werden, und Ausrichten derselben mittels einer Drückvorrichtung (4), ein Klebstoff mit einer einheitlichen und homogenen Spray auftragen, Kalt-Umformen.

5. Verwendung einer Kopfdichtung nach einem der Ansprüche 1 bis 3, und einer Dichtung aus Öl und Graphit, die aus einer Endlosbahn aus einem metallischen Material und einem Graphit mit hoher Dichte, die gleichmäßig auf einer Spirale mit einer kontrollierten Geschwindigkeit gewickelt wird, mit einer Drosselklappe, um die Dichtungswirkung zwischen der Scheibe (6) der Drosselklappe und dem Sitz (7), wobei die beiden Dichtungen, die Kopfdichtung (1) und die Dichtung aus Öl und Graphit (5) in Kombination wirken, wobei die erste die Radialdichtungswirkung (8), und die zweite di Axialdichtungswirkung (9), gewährleisten.

## Revendications

1. Tête d'étanchéité comprenant une pluralité de lames, ou plutôt sous la forme d'une couronne circulaire, qui sont disposées les unes sur le sommet des autres selon une alternance d'un métal (2) et d'un non-métal (3), lesdites lames étant maintenues ensemble au moyen d'une disposition d'un adhésif entre chaque paire de lames consécutives, ledit adhésif étant appliqué sous la forme d'une pulvérisation, **caractérisé en ce que** ledit adhésif est une pulvérisation de colle constituée d'une dispersion de colle naturelle et de la résine dans les substances suivantes: naphta <50%, cyclohexane <25%, gaz propane liquéfié 25%, isobutane <25%, et acétone <10%.

2. Tête d'étanchéité selon la revendication 1, dans laquelle les lames métalliques (2) sont faites en acier, de préférence en acier inoxydable, tandis que les lames non métalliques (3) sont formées à partir d'un graphite ou de PTFE.

3. Tête d'étanchéité selon la revendication 2, dans laquelle le graphite est du type à haute densité, en particulier supérieure à 1,5 g/cm³.

4. Procédé de fabrication d'une tête d'étanchéité telle que définie dans les revendications précédentes 2 ou 3, se composant des opérations suivantes: découpage d'une plaque, de préférence avec une technique de laser, la refiler et la rendre rugueuse, coupage du graphite, réunion des couches d'acier et de graphite en les empilant de manière alternée l'une sur l'autre et les aligner au moyen d'un dispositif de poussée (4), appliquer de la colle avec une pulvérisation uniforme et homogène, moulage à froid.

5. Utilisation d'une tête d' étanchéité selon l'une quelconque des revendications 1 à 3, et d'une tête d'étanchéité faite d'huile et de graphite, constituée d'une bande continue d'un matériau métallique et avec une densité élevée de graphite qui a son tour est uniformément enroulée en spirale avec une vitesse contrôlée par une soupape d'étranglement pour assurer l'étanchéité entre le disque (6) de la soupape d'étranglement et le siège (7), dans laquelle les deux têtes d'étanchéité, la tête d'étanchéité (1) et la tête d'étanchéité faite d'huile et de graphite (5) agissent en combinaison, la première assurant l'étanchéité radiale (8) et la deuxième assurant l'étanchéité axiale (9).
